# EUROPEAN PATENT SPECIFICATION

(11) **EP 1 095 221 B1**
(45) Date of publication and mention of the grant of the patent: **08.01.2003**
(21) Application number: 99918173.8
(22) Date of filing: 23.04.1999
(51) Int. Cl.: F16F 13/10, F16F 1/42, F16F 3/087

(54) **MOVEMENT-LIMITING ABUTMENT ARRANGEMENTS**
BEWEGUNGSBEGRENZUNGSEINRICHTUNG
ENSEMBLES DE BUTOIRS LIMITANT LE MOUVEMENT

(30) Priority: 08.07.1998 GB 9814770
(43) Date of publication of application: 02.05.2001
(73) Proprietor: Trelleborg Aktiebolag, 231 22 Trelleborg (SE)
(72) Inventor: PEAN, Thomas, F-44000 Nantes (FR); TOURNIER, Pascal, F-44330 La Pallet (FR)
(74) Representative: Preissner, Nicolaus
(86) International application number: GB9901274
(87) International publication number: WO00003154

(56) References cited:
- DE-C- 930 054
- GB-A- 1 589 548
- US-A- 2 697 578
- US-A- 5 183 243

## Description

The invention relates to a movement-limiting abutment arrangement for resiliently limiting relative movement of first and second bodies towards each other, comprising abutment means made of resilient material, and mounting means for mounting the abutment means between the two bodies whereby relative movement of the two bodies towards each other is resisted by contact with and compression of the resilient material, the mounting means permitting the abutment means to move to at least a limited extent in response to relative movement of the two bodies in a direction transverse to their relative movement towards each other whereby to reduce the creation of a shear force in the resilient material in response to the transverse movement.

Such an arrangement is shown, for example, in GB-A-978 847, GB-A-1 073 419 and GB-A-1 589 548. These arrangements are in the form of fenders for marine use for protecting docks, quays and similar structures from damage by ships. In these known arrangements, the abutment means comprise rotatably mounted members such as rollers or cast-off tyres. However, such arrangements are relatively complex because of the need to provide the rotating movement.

Furthermore, a movement-limiting abutment arrangement of the above-identified kind is disclosed in DE-A-930 054. This arrangement comprises abutment means which are made of an annular ring. The annular ring provides a rotating movement without slipping between two concentric bodies. The rotating movement of the annular ring is disadvantageous.

According to the invention, therefore, the known arrangement as first set forth above is characterized in that the mounting means mounts the abutment means for movement in the transverse direction by flexing of the resilient material.

Movement-limiting abutment arrangements embodying the invention, and for use in limiting the movement of a resiliently supported engine or other part in a motor vehicle body, will now be described, by way of example only, with reference to the accompanying diagrammatic drawings in which:
Figure 1 is a side view, partly in section, of one of the movement-limiting abutment arrangements associated with a hydroelastic engine mount;
Figure 2 is a plan view corresponding to Figure 1;
Figure 3 is a side elevation of an abutment in the arrangement of Figures 1 and 2;
Figure 4 is a view looking in the direction of the arrow IV of Figure 3;
Figure 5 is a plan view looking in the direction of the arrow V of Figure 3;
Figure 6 is a side elevation corresponding generally to Figure 1 but showing a modified arrangement;
Figure 7 is a plan view corresponding to Figure 6;
Figure 8 corresponds to Figure 6 but shows a further modification;
Figure 9 is a plan view of the abutment arrangement shown in Figure 8.
Figure 10 is a side elevation, partly in section, of part of another of the abutment arrangements, employing an insert;
Figure 11 is a side elevation of a further one of the abutment arrangements, incorporating a plurality of connected abutments;
Figure 12 is a side elevation of another of the abutment arrangements, supported by means of a belt;
Figure 13 is a plan view corresponding to Figure 12;
Figure 14 is a side view of a further one of the abutment arrangements, in which the abutment is supported by a stud;
Figure 15 is a side elevation of another of the abutment arrangements, in which the abutment is supported by a rubber belt;
Figure 16 is a plan view corresponding to Figure 15;
Figure 17 is a plan view of another of the abutment arrangements, in which the abutment is supported by flexible tabs;
Figure 18 is a plan view of another of the abutment arrangements, in which the abutment is held in position by pre-compression;
Figure 19 is a side elevation of another of the abutment arrangements, comprising a circular abutment of annular configuration;
Figure 20 corresponds to Figure 19 but shows a further modification; and
Figure 21 is a cross-section on the line XXI-XXI of Figure 20.

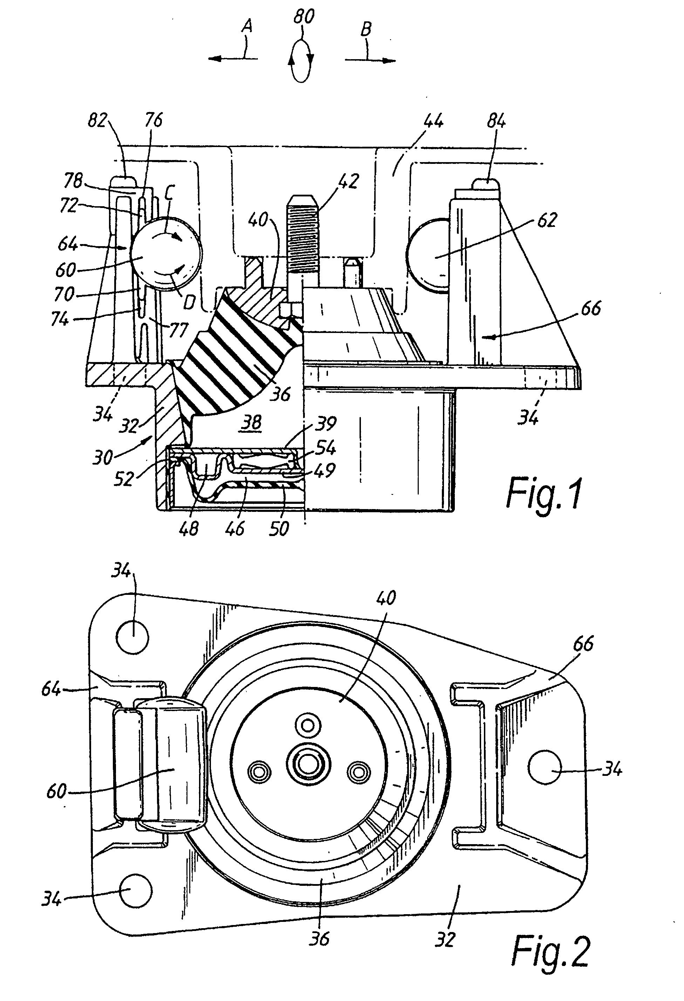

Figure 1 shows a engine mount 30 comprising a dish-shaped metal plate 32 which is arranged to be bolted to the chassis or body of a vehicle by means of holes 34. A conically shaped resilient supporting element 36 defining a hollow working chamber 38 and preferably made of relatively stiff rubber carries a metal element 40 from which upstands a bolt 42 which, in use, is secured to the engine shown dotted at 44. The engine 44 is thus resiliently supported from the chassis or body of the vehicle by the rubber element 36.

The working chamber has a base 39 connected to a compensation chamber 46 by a helical or circular channel of which part is shown at 48. The compensation chamber 46 is defined rigid metal plate 49 and by a flexible membrane 50 which is sealingly clamped around its periphery, as shown at 52, to the dish-shaped member 32. The chambers 38 and 46, and the connecting channel 48, are filled with hydraulic fluid. Vibration of the engine 44, in response to normal movement of the engine components and also in response to movement of the engine as a whole relative to the chassis or body of the vehicle following changes in engine torque or changes in the road contour, are partially absorbed by the rubber element 36. In addition, the corresponding oscillations of the rubber element 36 exert a pumping action on the hydraulic fluid in the working chamber 38, causing it to be pumped to and fro between that chamber and the compensation chamber 46 via the channel 48. In known fashion, the channel is designed to have a particular resonant frequency at which it exerts a damping effect on the oscillatory movement of the fluid, and thus helps to damp the vibrations of the engine. In addition, in known fashion the chambers 38 and 46 can be interconnected via grills formed in the base 39 and in the plate 49, the holes in these grills opening into a chamber containing a disc-shaped flexible valve 54. Valve 54 vibrates in response to small amplitude, relatively high frequency, vibrations of the engine, thus interconnecting the chambers 38 and 46 for such vibrations and by-passing the channel 48. For larger amplitude and lower frequency vibrations, the movement of the valve element 54 is not sufficient to compensate for variation in volume of the working chamber and the main connection between the chambers 38 and 46 is via the channel 48.

In this way, therefore, the engine is resiliently supported from the chassis or body of the vehicle but its vibrations are controllably damped.

However, under certain circumstances (for example, sudden and heavy braking or sudden acceleration, or an abrupt change in direction or road contour), there will be a tendency for the engine to undergo a substantial movement relative to the chassis or body. It is necessary to limit such movement in a firm but nevertheless resilient manner in order to prevent damage and to avoid direct metal to metal contact between the engine and part of the chassis or body which would cause the transmission of unpleasant noise or vibration to the occupants of the vehicle.

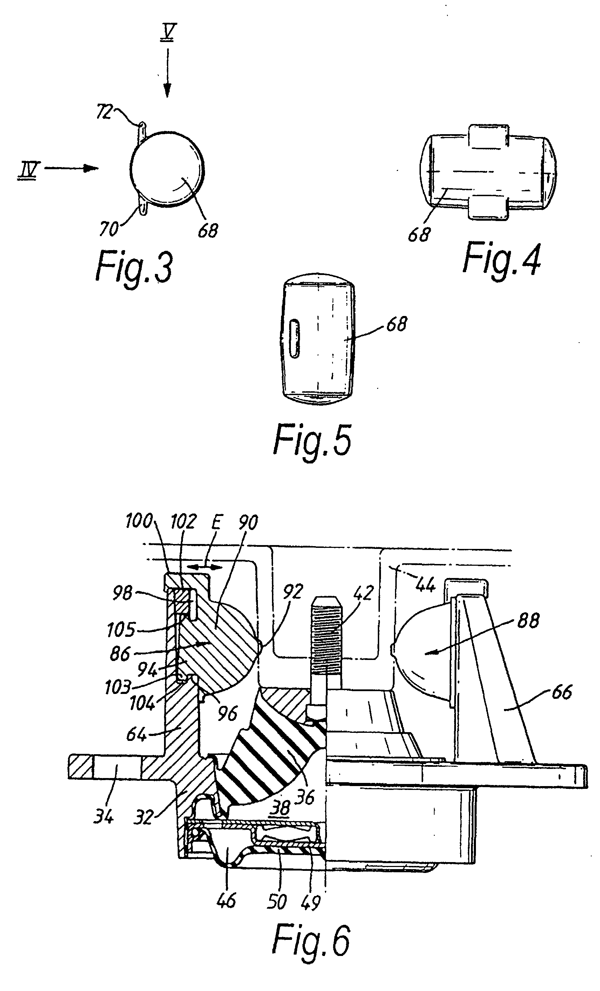

As shown in Figures 1 and 2, therefore, abutments 60 and 62 are provided. Each abutment is generally cylindrical in shape. Each abutment is supported on a rigid bracket 64,66 which is mounted on and rigid with the mounting plate 32. The shape of the abutments 60,62 is shown more clearly in Figures 3,4 and 5. As shown in these Figures, each abutment has a cylindrical body 68 integrally supporting two resilient ears 70,72. As shown in Figure 1, abutment 60 is mounted in position on the bracket 64 by means of the ears 70,72 which engage in slots 74,76 which are formed in metal clamps 77,78 which are in turn fixed to the bracket 64. The abutment 62 is mounted in similar fashion on the bracket 66 (but has been omitted from Figure 2 for clarity).

As shown by the dotted outline in Figure 1, the engine 44 is normally lightly in contact with the abutments 60,62 (though may be spaced slightly from them) in the normal position of the engine.

In response to sudden and substantial movement of the engine relative to the chassis or body (such as for the reasons explained above), the engine 44 will move generally in the direction of the arrow A or the arrow B, and will thus compress the abutment 60 or the abutment 62 which accordingly and resiliently limits the movement of the engine to avoid damage and unnecessary mechanical contact and vibration.

In fact, such substantial movement of the engine will not normally be exactly in the horizontal direction indicated by the arrows A and B but will have a vertical component, thus tending to move in an eliptical direction indicated diagrammatically at 80. Because the abutments 60,62 are mounted by means of the relatively flexible ears 70,72, they can carry out angular movement, as shown by the arrows C and D in Figure 1, in response to the eliptical movement of the engine. In this way, the tangential force exerted on the abutments 60,62 by the eliptical movement of the engine produces substantially no shear force in the material of the abutment but is, instead, accommodated by angular movement of the abutment. The abutments shown in Figures 1 to 5 are thus advantageous over other abutments which are mounted on the chassis or body of the vehicle so as to be substantially incapable of any angular movement. Therefore, in response to a sudden movement of the engine relative to the chassis or body, such other abutments become subjected not only to a substantial compressive force but also to a substantial shear force because of the vertical component of the engine movement. Such abutments therefore become extremely stiff and transmit the vibratory movements of the engine to the chassis or body of the vehicle, which is contrary to the objectives of the abutments. These disadvantages are avoided by the abutments illustrated, because of their "rolling" capability.

At the upper end of the brackets 64,66, small rubber stops 82,84 are provided for resiliently resisting excessive vertically downward movement of the engine.

Other embodiments showing modified forms of abutment capable of such "rolling" movement will now be described.

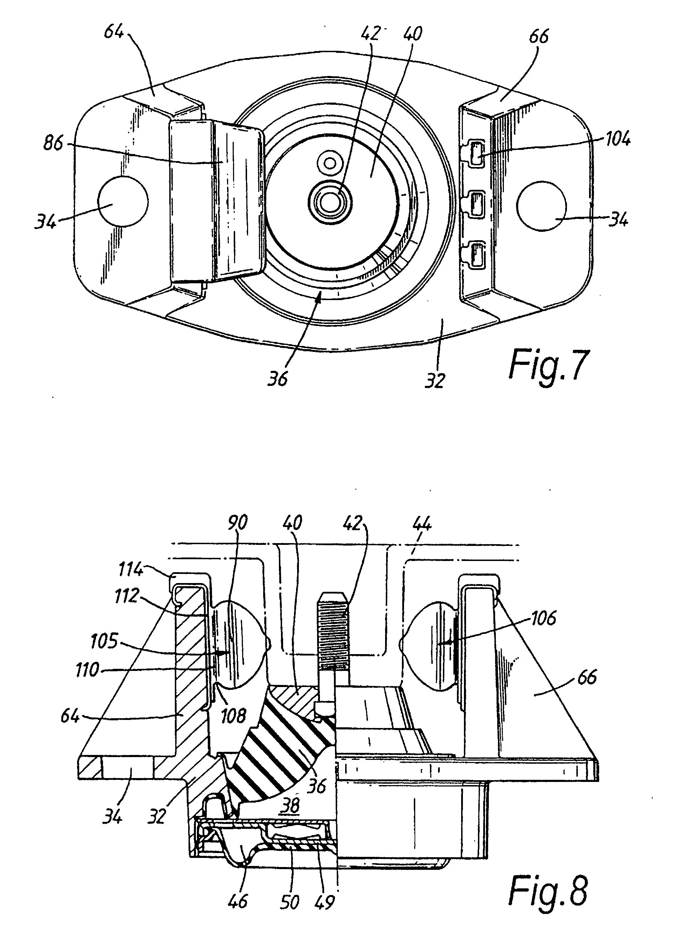

One such modified arrangement is shown in Figures 6 and 7. Parts in Figures 6 and 7 corresponding to those in Figures 1 and 2 are similarly referenced.

In the embodiment of Figures 6 and 7, abutments 86 and 88 of non-cylindrical shape replace the cylindrical abutments 60 and 62 of Figures 1 and 2. Abutment 86 has a main body 90 of almost hemispherical shape with a pointed protruberance 92. The body 90 is integral with a base part 94 defining a small slot 96 and a larger slot 98. An overlapping extension 100 embraces the top of the bracket 64. The bracket 64 has a rigid element 102 secured to it. The abutment 86 is held in position by engagement of an ear 103 in a slot 104 (see also Figure 7) in the bracket 64 so that a further ear 105 compressingly engages the element 102. However, the size and depth of the slot 98 is such that the abutment 86 is capable of limited movement in the directions of the arrow E (Figure 6). Abutment 88 is mounted in the same way as abutment 86.

In this way, therefore, the abutments 86,88 are rendered capable of limited "rolling" movement, similar to that permitted to the abutments 60 and 62 in the embodiment of Figures 1 to 5. Again, therefore, the generation of significant shear force in the abutments, in response to eliptical movement of the engine, is substantially avoided.

The overlapping lip 100 of the abutment 86 carries out the function of the stop 82 (Figure 1).

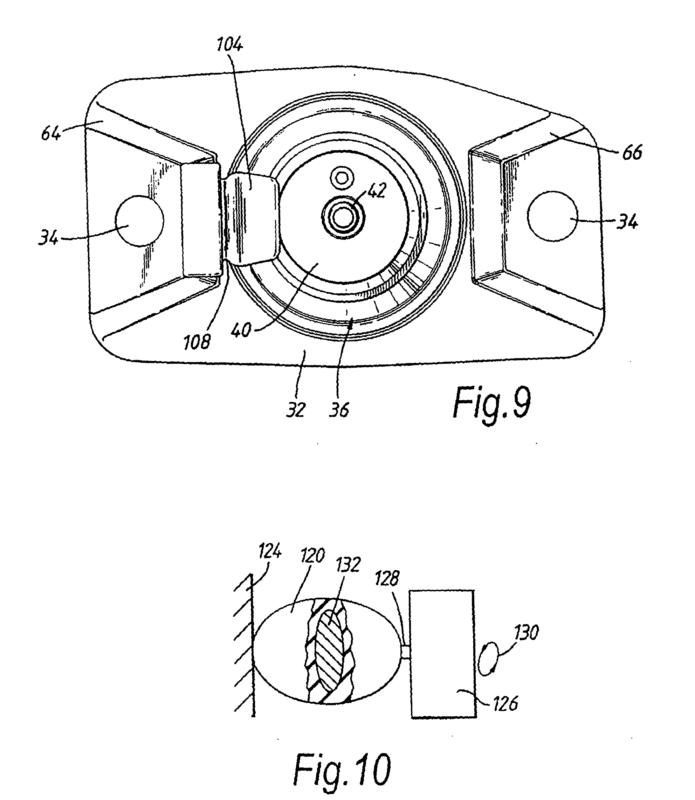

Figures 8 and 9 show a modification of the arrangement of Figures 6 and 7. In this case, abutments 105 and 106 are used. Abutment 105 has a hemispherically shaped body 90 similar to the body 90 of the abutment 86 (Figures 6 and 7). However, the abutment 105 differs from the abutments 86,88 in that it has a narrowed "waist" 108, with a base part 110 adhesively secured to a metal plate 112 which is clipped to the bracket 64 to support the abutment 105 in position. The abutment includes an overlapping lip part 114 performing the function of the stop 82 in Figure 1.
Abutment 105 is similarly shaped and similarly mounted.

Because the abutments 104 and 106 have narrowed waist portions 108, the abutments are given the limited "rolling" capability, similar to the abutments shown in the preceding Figures, again enabling them to accommodate the vertical components of the eliptical engine movement without generating substantial shear force in the abutments.

In the remaining Figures, different forms of abutment arrangement are shown and will now be described. In these examples, the actual engine mount (corresponding to the engine mount 30 in Figures 1 to 9, is not shown. It will be appreciated, however, that the abutment arrangements do not have to be directly associated with an engine mount. Thus, the abutment arrangements to be described below, and also the abutment arrangements shown in Figures 1 to 7, can be situated at positions displaced from the positions of the engine mount.

As shown in Figure 10, an abutment arrangement comprises an abutment 120 of eliptical shape which is mounted on a part 124 of the body or chassis of the vehicle so as to be capable of limited "rolling" movement. Shown at 126 is part of the engine of the vehicle, or an arm rigidly attached to the engine. The abutment 20 has a small projecting horizontal lip 128 which makes contact with the arm 126. Lip 128 reduces the stiffness for low amplitude vibrations at engine idling speed. Because of the oval shape of the abutment 120 and its ability to "roll" in response to the eliptical movement of the arm 26 (as shown by the arrows 130), such the eliptical movement produces minimal shear force in the abutment. The abutment can have a strengthening embedded reinforcement 132 to adjust the horizontal stiffness without altering the vertical stiffness.

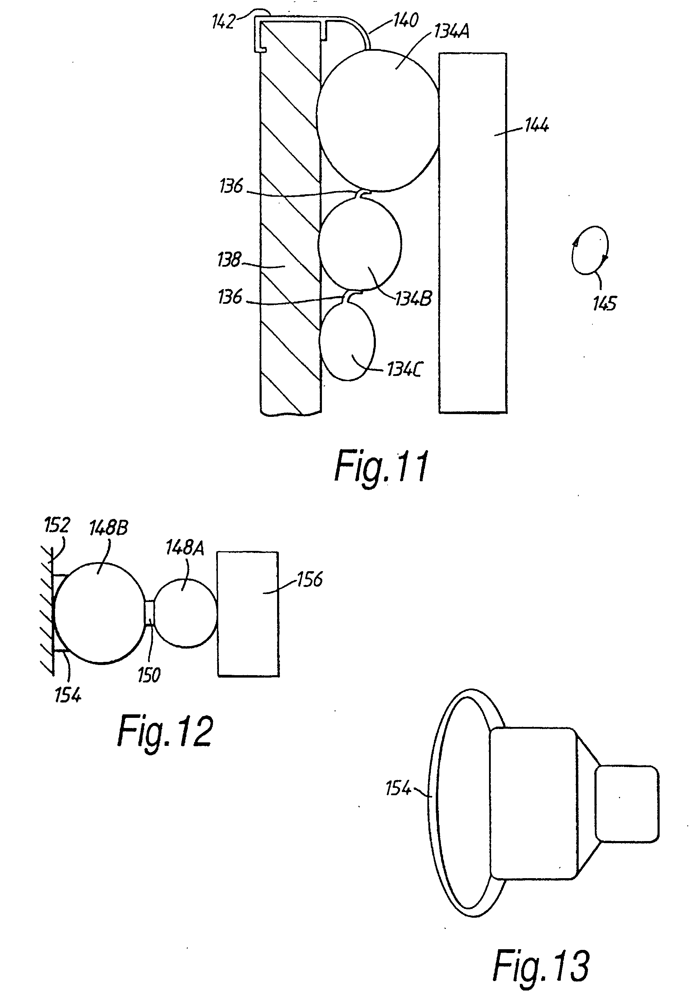

Figure 11 shows an abutment arrangement incorporating three abutments 134A, 134B and 134C of progressively reducing diameter. They are connected together by integral flexible webs 136 and mounted in position on a bracket 138, connected to the chassis or body of the vehicle, by means of a web 140 and a fixing clip 142. The engine or an arm rigid with the engine is shown at 144. In the event of sudden and substantial movement of the engine, the arm 144 moves into contact with the abutment 134A. If the movement is sufficiently large, abutment 134A will be sufficiently compressed as to move the arm progressively into contact with the abutments 134B and 134C. It will be apparent that the abutments 134A,134B and 134C are each capable of limited "rolling" movement with respect to the bracket 138, so as to accommodate the eliptical movement of the engine (see arrows 145) without the creation of substantial shear force.

Figures 12 and 13 show in elevation and plan view another abutment arrangement in which the abutment comprises a first cylindrical part 148A connected to a second cylindrical part 148B, of larger diameter, by means of a thin membrane 150. The abutment is mounted on a bracket 152, which is rigid with the chassis or body of the vehicle, by means of a belt 154 extending around the bracket 152. The engine, or an arm connected to it, is shown at 156. Because of the manner in which the abutment is mounted on the bracket 152 and because of the thin membrane 150, the abutment can undergo limited rolling movement in response to the eliptical movement of the engine.

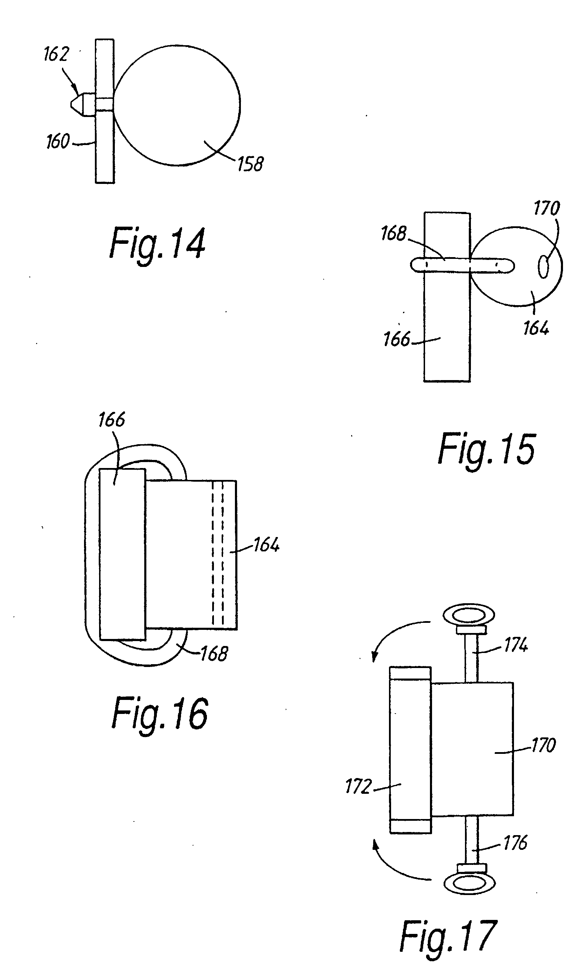

In the abutment arrangement of Figure 14, a spherical abutment 158 is mounted on a bracket 160, which is rigid with the chassis or body of the vehicle, by means of a stud 162. Again, the necessary rolling movement is permitted (and also movement in the other directions).

In the arrangement shown in Figures 15 and 16, an abutment 164 is mounted on a bracket 166 by means of a rubber belt 168 so as to be capable of limited rolling movement in response to contact with the engine (not shown). The abutment 164 is provided with a hole or hollow chamber 170 which provides initially increased flexibility and compressibility but which become more limited when the material of the abutment has been compressed sufficiently to close the hole or chamber 170.

The abutment 170 shown in Figure 17 is generally cylindrical-shaped in cross-section (but can have another shape) and is mounted on a bracket 172 by rubber tabs 174,176 which are folded over the ends of the bracket 172. The flexibility of the rubber tabs 174,176 provides the necessary "rolling" capability for the abutment 170.

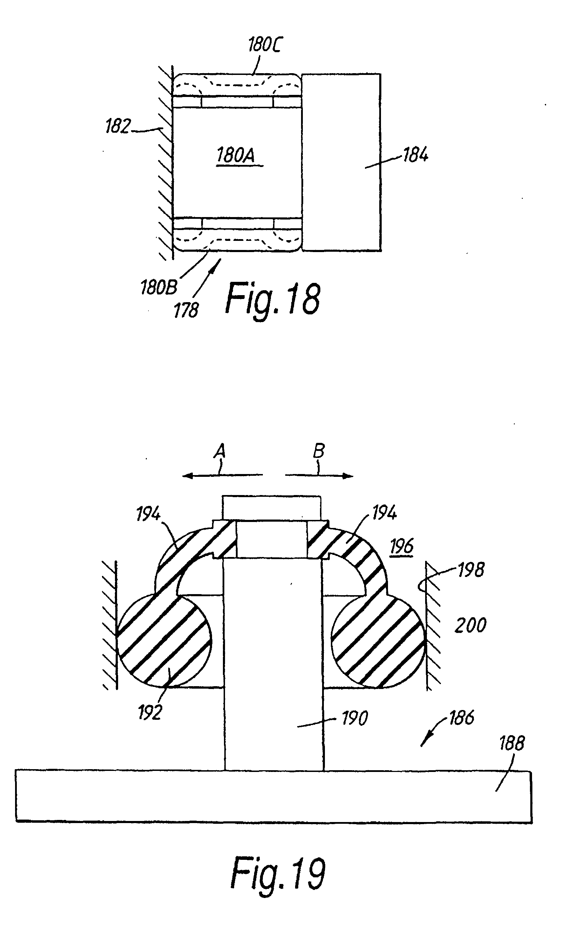

In the abutment arrangement shown in Figure 18, the abutment 178 comprises a central part 180A of generally cylindrical shape in cross-section (but can have another shape) which is integrally joined to disc-shaped end parts 180B and 180C which have a greater diameter than the diameter of the main part 180A. The disc-shaped end parts 180B and 180C are permanently compressed, in a diametral direction, between a wall 182, forming part of the chassis or body of the vehicle, and an arm 184 which is rigid with the engine. In this way, the abutment 178 is mounted in position. Because the abutment 178 is held in position only by compression of the end parts 180B and 180C, it is thus capable of the required limited rolling movement.

The abutment 120 shown in Figure 10 can be mounted in any of the ways described with reference to Figures 11,13,15,17 and 18.

In the abutment arrangement of Figure 19, a rigid bracket 186 comprises a plate 188 rigidly attached to the chassis or body of the vehicle, and an upstanding leg 190. The leg 190 supports an annular-shaped abutment 192 by means of integral and flexible rubber arms 194. The annular abutment 192 is positioned within an annular space 196 defined by an annular wall 198 formed by means of a suitably shaped hole or recess in an arm 200 rigid with the engine. Sudden movement of the engine in the direction of the arrow A or B is restrained by compression of the annular abutment 192, and the vertical component of the eliptical movement of the engine is accommodated by the permitted rolling movement of the abutment, again preventing the generation of excessive shear force in the material of the abutment. The annular abutment 192 can be interrupted around its periphery.

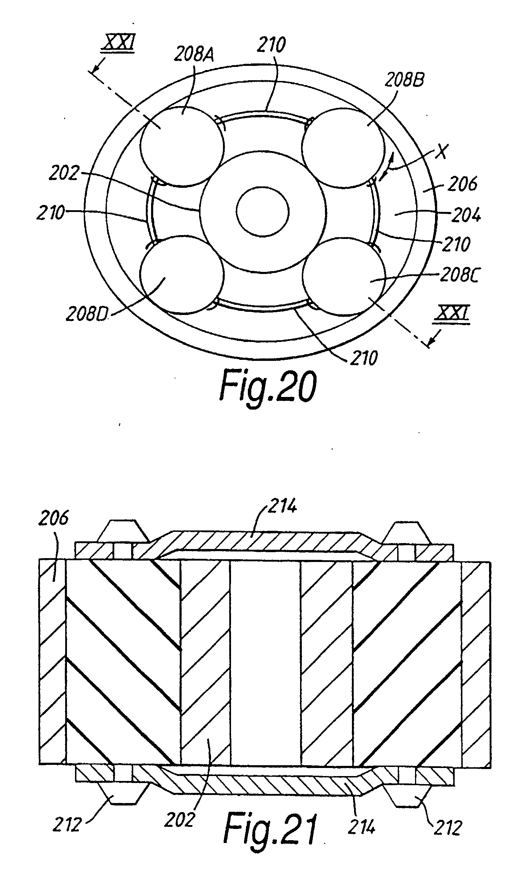

In the abutment arrangement shown in Figure 20, an arm or pin 202, rigid with the engine, extends vertically upwards and nominally centrally of a circular hole or recess 204 defined by a ring 206 which is rigidly attached to the chassis or body of the vehicle. The abutment arrangement comprises spherical or cylindrical abutments 208A,208B,208C and 208D (or which have other revolutionary shape), which are mounted between the pin 202 and the wall 206 and supported in position by flexible and integral connecting webs 210. The eliptical movement of the engine is accommodated by the rolling movement of the abutments in the direction of the arrows X, the radial movement and vertical movement of light amplitude being restrained by compression of the abutments.

It would be appreciated that, in the arrangement shown in Figure 19, the bracket 186 could be connected to the engine, instead of to the chassis or body of the vehicle, and the arm 200 could be a wall defining a recess in the chassis or body. Similarly, the arrangement of Figure 20 could be reversed so that the wall 206 is the wall of a hole or recess in the engine or an arm connected to the engine, and the pin 202 could be rigid with the chassis or body of the vehicle.

Figure 21 shows an alternative way in which the abutments 208A,208B,208C and 208D can be connected to each other - by means of axial pins 212 and linking arms 214.

It will be appreciated that there are many other ways in which the required limiting rolling ability of an abutment can be obtained.

Although the abutment arrangements disclosed have been described as intended for limiting movement of the engine in a motor vehicle, they can be used for limiting movement of other resiliently supported components in a vehicle, such as the transmission or gearbox. They can also be used in other applications not involving motor vehicles.

## Claims

1. A movement-limiting abutment arrangement for resiliently limiting relative movement of first and second bodies (30,124,138,152,160,166,172,182,188,206;44,126, 144,156,184,200,202) towards each other, comprising abutment means (60,62,86,88,105,106,120,134,148,158,164,170,178,192,208) made of resilient material, and mounting means (64,66,94,96,98,112,140,154,162,168,174,176,180,194,210) for mounting the abutment means (60,62,86,88,105,106,120,134,148,158,164, 170,178,192,208) between the two bodies (30,124,138,152,160,166,172,182,188, 206;44,126,144,156,184,200,202) whereby relative movement of the two bodies (30,124,138,152,160,166,172,182,188,206;44,126,144,156,184,200,202) towards each other is resisted by contact with and compression of the resilient material, the mounting means (64,66,94,96,98,112,140,154,162,168,174,176,180,194,210) permitting the abutment means (60,62,86,88,105,106,120,134,148,158,164,170,178,192,208) to move to at least a limited extent in response to relative movement of the two bodies (30,124,138,152,160,166,172,182,188,206;44,126,144,156,184,200,202) in a direction transverse to their relative movement towards each other whereby to reduce the creation of a shear force in the resilient material in response to the transverse movement, **characterised in that** the mounting means (64,66,94,96,98,112,140, 154,162,168,174,176,180,194,210) mounts the abutment means (60,62,86,88,105,106, 120,134,148,158,164,170,178,192,208) for movement in the transverse direction by flexing of the resilient material.

2. An abutment arrangement according to claim 1, **characterised in that** the abutment means (60,62,86,88,105,106,120,134,148,158,164,170,178,192,208) comprises a portion of the resilient material formed into predetermined shape, and **in that** the mounting means comprises flexible attachment means (64,66,94,96,98,112,140,154, 162,168,174,176,180,194,210).

3. An abutment arrangement according to claim 1 or 2, **characterised in that** the mounting means (64,66,94,96,98,112,140,154,162,168,174,176,180,194,210) mounts the abutment means on one of the bodies (30,124,138,152,160,166,172,182,188, 206;44,126,144,156,184,200,202).

4. An abutment arrangement according to any preceding claim, **characterised in that** the abutment means (60,62,86,88,105,106,120,134,148,158,164,170,178,192,208) presents at least one curved surface to at least one of the bodies (44,126,144,156,184,200,202).

5. An abutment arrangement according to claim 4, **characterised in that** the abutment means (120,134,148,158,164,192,208) also presents a curved surface to the other body (30,124,138,152,160,166,172,182,188,206).

6. An abutment arrangement according to claim 3 or 4, **characterised in that** the said transverse movement comprises movement of the said one body (44,126,144,156,184,200,202) in a direction generally tangential to and in contact with the curved surface.

7. An abutment arrangement according to any one of claims 4 to 6, **characterised in that** the abutment means (134,208) is generally spherical.

8. An abutment arrangement according to any one of claims 4 to 6, **characterised in that** the abutment means (60,62,148,164,170,178) is generally cylindrical.

9. An abutment arrangement according to any one of claims 4 to 6, **characterised in that** the abutment means (120) is generally oval or eliptical.

10. An abutment arrangement according to any preceding claim, **characterised in that** the abutment means (105,106,120) presents a protruberance extending towards one said body (44,126).

11. An abutment arrangement according to any one of claims 1 to 6, **characterised in that** the abutment means comprises a plurality of individual abutments (134,148,208) each made of the resilient material.

12. An abutment arrangement according to claim 11, **characterised in that** the abutments (134,148) are mounted adjacent to each other and have respectively differing cross-sectional sizes so as sequentially to be compressed by relative movement of the two bodies (30,124,138,152,160,166,172,182,188,206;44,126,144,156,184,200,202) towards each other.

13. An abutment arrangement according to any one of claims 1 to 3, **characterised in that** the first body (44,202) is positioned within an area encompassed by the second body (30,206) so that the relative movement towards each other of the two bodies (44,202,30,206) comprises movement of the first body (44,202) towards a portion of the second body (30,206) and simultaneous movement of the first body (44,202) away from an opposite portion of the second body (30,206), and **in that** the abutment means comprises abutment means (60,62,86,88,192,208) positioned at locations spaced apart around the first body (44,202) and between it and the second body (30,206).

14. An abutment arrangement according to claim 13, **characterised in that** the second body (206) extends annularly around the first body (202).

15. An abutment arrangement according to claim 13 or 14, **characterised in that** the abutment means comprises individual abutments (60,62,86,88,208) each made of the resilient material.

16. An abutment arrangement according to claim 15, **characterised in that** each of the abutments (60,62,86,88,208) is of spherical or cylindrical cross-section.

17. An abutment arrangement according to claim 16, **characterised in that** the abutments (208) are flexibly linked together.

18. An abutment arrangement according to claim 13, **characterised in that** the abutment means (192) extends continuously around the first body.

19. An abutment arrangement according to claim 18, **characterised in that** the second body (206) extends annularly around the first body (202) and **in that** the abutment means (192) extends annularly around the first body (202) and between it and the second body (206).

20. An abutment arrangement according to any preceding claim, **characterised in that** the abutment means (120) incorporates stiff reinforcement (132).

21. An abutment arrangement according to any preceding claim, **characterised in that** the abutment means (164) includes a hollow space (170) for changing the initial compressibility of the abutment means (164).

22. An abutment arrangement according to any preceding claim, **characterised in that** the abutment means (60,62,148,164,192) includes a flexible extension (70,72,150,154,168,194) and in which the mounting means comprises means for receiving and holding the flexible extension (70,72,150,154,168,194).

23. An abutment arrangement according to any one of claims 1 to 21, **characterised in that** the mounting means comprises a flexible attachment to the abutment means.

24. An abutment arrangement according to any one of claims 1 to 21, **characterised in that** the mounting means comprises means (94,96) for loosely and limitingly securing the abutment means (86,88).

25. An abutment arrangement according to any one of claims 1 to 21, **characterised in that** the mounting means comprises securing means (180B,180C) made of resilient material attached to the abutment means (180A) but having a larger dimension than the abutment means (180A) in the direction of relative movement towards each other of the two bodies (182,184), whereby to be normally compressed between the two bodies (182,184) and thereby to support the abutment means (180A) therebetween.

26. An abutment arrangement according to any preceding claim, **characterised in that** one of the bodies (30) is part of or is connected to the chassis or body of a vehicle and the other body (44) is part of or is connected to the engine thereof.

27. An abutment arrangement according to claim 26, **characterised in that** it is in combination with an engine mount (30) for resiliently supporting the engine (44) from the chassis or body of the vehicle.

## Patentansprüche

1. Bewegungsbegrenzende Anschlaganordnung zur elastischen Begrenzung einer Relativbewegung erster und zweiter Körper (30, 124, 138, 152, 160, 166, 172, 182, 188, 206; 44, 126, 144, 156, 184, 200, 202) zueinander, die eine Anschlageinrichtung (60, 62, 86, 88, 105, 106, 120, 134, 148, 158, 164, 170, 178, 192, 208), die aus elastischem Material besteht, und eine Befestigungseinrichtung (64, 66, 94, 96, 98, 112, 140, 154, 162, 168, 174, 176, 180, 194, 210) zur Befestigung der Anschlageinrichtung (60, 62, 86, 88, 105, 106, 120, 134, 148, 158, 164, 170, 178, 192, 208) zwischen den beiden Körpern (30, 124, 138, 152, 160, 166, 172, 182, 188, 206; 44, 126, 144, 156, 184, 200, 202) aufweist, wodurch eine Relativbewegung der beiden Körper (30, 124, 138, 152, 160, 166, 172, 182, 188, 206; 44, 126, 144, 156, 184, 200, 202) zueinander durch einen Kontakt mit dem elastischen Material und das Zusammendrücken des elastischen Materials Widerstand entgegengesetzt wird, wobei es die Befestigungseinrichtung (64, 66, 94, 96, 98, 112, 140, 154, 162, 168, 174, 176, 180, 194, 210) zuläßt, daß sich die Anschlageinrichtung (60, 62, 86, 88, 105, 106, 120, 134, 148, 158, 164, 170, 178, 192, 208) als Reaktion auf eine Relativbewegung der beiden Körper (30, 124, 138, 152, 160, 166, 172, 182, 188, 206;44, 126, 144, 156, 184, 200, 202) in eine Richtung quer zu ihrer Relativbewegung zueinander um mindestens ein begrenztes Ausmaß bewegt, um dadurch die Erzeugung einer Scherkraft im elastischen Material als Reaktion auf die Querbewegung zu reduzieren, **dadurch gekennzeichnet, daß** die Befestigungseinrichtung (64, 66, 94, 96, 98, 112, 140, 154, 162, 168, 174, 176, 180, 194, 210) die Anschlageinrichtung (60, 62, 86, 88, 105, 106, 120, 134, 148, 158, 164, 170, 178, 192, 208) zur Bewegung in der Querrichtung durch Biegung des elastischen Materials befestigt.

2. Anschlaganordnung nach Anspruch 1, **dadurch gekennzeichnet, daß** die Anschlageinrichtung (60, 62, 86, 88, 105, 106, 120, 134, 148, 158, 164, 170, 178, 192, 208) einen Abschnitt des elastischen Materials aufweist, der zu einer vorbestimmten Form geformt ist, und daß die Befestigungseinrichtung flexible Befestigungseinrichtungen (64, 66, 94, 96, 98, 112, 140, 154, 162, 168, 174, 176, 180, 194, 210) aufweist.

3. Anschlaganordnung nach Anspruch 1 oder 2, **dadurch gekennzeichnet, daß** die Befestigungseinrichtung (64, 66, 94, 96, 98, 112, 140, 154, 162, 168, 174, 176, 180, 194, 210) die Anschlageinrichtung an einen der Körper (30, 124, 138, 152, 160, 166, 172, 182, 188, 206; 44, 126, 144, 156, 184, 200, 202) befestigt.

4. Anschlaganordnung nach einem der vorhergehenden Ansprüche, **dadurch gekennzeichnet, daß** die Anschlageinrichtung (60, 62, 86, 88, 105, 106, 120, 134, 148, 158, 164, 170, 178, 192, 208) mindestens einem der Körper (44, 126, 144, 156, 184, 200, 202) mindestens eine gekrümmte Oberfläche präsentiert.

5. Anschlaganordnung nach Anspruch 4, **dadurch gekennzeichnet, daß** die Anschlageinrichtung (120, 134, 148, 158, 164, 192, 208) dem anderen Körper (30, 124, 138, 152, 160, 166, 172, 182, 188, 206) eine gekrümmte Oberfläche präsentiert.

6. Anschlaganordnung nach Anspruch 3 oder 4, **dadurch gekennzeichnet, daß** die Querbewegung eine Bewegung des einen Körpers (44, 126, 144, 156, 184, 200, 202) in eine Richtung aufweist, die allgemein tangential und in Kontakt mit der gekrümmten Oberfläche verläuft.

7. Anschlaganordnung nach einem der Ansprüche 4 bis 6, **dadurch gekennzeichnet, daß** die Anschlageinrichtung (134, 208) allgemein kugelförmig ist.

8. Anschlaganordnung nach einem der Ansprüche 4 bis 6, **dadurch gekennzeichnet, daß** die Anschlageinrichtung (60, 62, 148, 164, 170, 178) allgemein zylindrisch ist.

9. Anschlaganordnung nach einem der Ansprüche 4 bis 6, **dadurch gekennzeichnet, daß** Anschlageinrichtung (120) allgemein oval oder elliptisch ist.

10. Anschlaganordnung nach einem der vorhergehenden Ansprüche, **dadurch gekennzeichnet, daß** die Anschlageinrichtung (105, 106, 120) ein Ausstülpung präsentiert, die sich zu dem Körper (44, 126) erstreckt.

11. Anschlaganordnung nach einem der Ansprüche 1 bis 6, **dadurch gekennzeichnet, daß** die Anschlageinrichtung mehrere einzelne Anschläge (134, 148, 208) aufweist, die jeweils aus elastischem Material bestehen.

12. Anschlaganordnung nach Anspruch 11, **dadurch gekennzeichnet, daß** die Anschläge (134, 148) benachbart zueinander angebracht sind und sich jeweils unterscheidende Querschnittsabmessungen aufweisen, so daß sie aufeinanderfolgend durch eine Relativbewegung der beiden Körper (30, 124, 138, 152, 160, 166, 172, 182, 188, 206; 44, 126, 144, 156, 184, 200, 202) zueinander zusammengedrückt werden.

13. Anschlaganordnung nach einem der Ansprüche 1 bis 3, **dadurch gekennzeichnet, daß** der erste Körper (44, 202) innerhalb eines Bereiches angeordnet ist, der durch den zweiten Körper (30, 206) umfaßt wird, so daß die Relativbewegung der beiden Körper (44, 202, 30, 206) zueinander eine Bewegung des ersten Körpers (44, 202) zu einem Abschnitt des zweiten Körpers (30, 206) hin und eine gleichzeitige Bewegung des ersten Körpers (44, 202) von einem gegenüberliegenden Abschnitt des zweiten Körpers (30, 206) weg aufweist, und daß die Anschlageinrichtung eine Anschlageinrichtung (60, 62, 86, 88, 192, 208) aufweist, die an Stellen angeordnet ist, die um den ersten Körper (44, 202) und zwischen ihm und dem zweiten Körper (30, 206) voneinander beabstandet sind.

14. Anschlaganordnung nach Anspruch 13, **dadurch gekennzeichnet, daß** sich der zweite Körper (206) ringförmig um den ersten Körper (202) erstreckt.

15. Anschlaganordnung nach Anspruch 13 oder 14, **dadurch gekennzeichnet, daß** die Anschlageinrichtung einzelne Anschläge (60, 62, 86, 88, 208) aufweist, die jeweils aus dem elastischen Material bestehen.

16. Anschlaganordnung nach Anspruch 15, **dadurch gekennzeichnet, daß** jeder der Anschläge (60, 62, 86, 88, 208) einen kugelförmigen oder zylindrischen Querschnitt aufweist.

17. Anschlaganordnung nach Anspruch 16, **dadurch gekennzeichnet, daß** die Anschläge (208) flexibel miteinander verbunden sind.

18. Anschlaganordnung nach Anspruch 13, **dadurch gekennzeichnet, daß** sich die Anschlageinrichtung (192) ununterbrochen um den ersten Körper erstreckt.

19. Anschlaganordnung nach Anspruch 18, **dadurch gekennzeichnet, daß** sich der zweite Körper (206) ringförmig um den ersten Körper (202) erstreckt und daß die Anschlageinrichtung (192) sich ringförmig um den ersten Körper (202) und zwischen ihm und dem zweiten Körper (206) erstreckt.

20. Anschlaganordnung nach einem der vorhergehenden Ansprüche, **dadurch gekennzeichnet, daß** die Anschlageinrichtung (120) eine steife Verstärkung (132) enthält.

21. Anschlaganordnung nach einem der vorhergehenden Ansprüche, **dadurch gekennzeichnet, daß** die Anschlageinrichtung (164) einen Hohlraum (170) aufweist, um die Anfangszusammendrückbarkeit der Anschlageinrichtung (164) zu ändern.

22. Anschlaganordnung nach einem der vorhergehenden Ansprüche, **dadurch gekennzeichnet, daß** die Anschlageinrichtung (60, 62, 148, 164, 192) eine flexible Erweiterung (70, 72, 150, 154, 168, 194) aufweist und in der die Befestigungseinrichtung eine Einrichtung aufweist, um die flexible Erweiterung (70, 72, 150, 154, 168, 194) aufzunehmen und zu halten.

23. Anschlaganordnung nach einem der Ansprüche 1 bis 21, **dadurch gekennzeichnet, daß** die Befestigungseinrichtung eine flexible Befestigung an der Anschlageinrichtung aufweist.

24. Anschlaganordnung nach einem der Ansprüche 1 bis 21, **dadurch gekennzeichnet, daß** die Befestigungseinrichtung eine Einrichtung (94, 96) aufweist, um die Anschlageinrichtung (86, 88) lose und begrenzend zu befestigen.

25. Anschlaganordnung nach einem der Ansprüche 1 bis 21, **dadurch gekennzeichnet, daß** die Befestigungseinrichtung eine Befestigungseinrichtung (180B, 180C) aufweist, die aus elastischem Material besteht, das an der Anschlageinrichtung (180A) befestigt ist, jedoch in die Richtung einer Relativbewegung der beiden Körper (182, 184) zueinander eine größere Abmessung als die Anschlageinrichtung (180A) aufweist, um dadurch normalerweise zwischen den beiden Körpern (182, 184) zusammengedrückt zu sein und dadurch die Anschlageinrichtung (180A) dazwischen zu halten.

26. Anschlaganordnung nach einem der vorhergehenden Ansprüche, **dadurch gekennzeichnet, daß** einer der Körper (30) ein Teil des Chassis oder der Karosserie eines Fahrzeuges ist oder damit verbunden ist und der andere Körper (44) ein Teil dessen Motors ist oder damit verbunden ist.

27. Anschlaganordnung nach Anspruch 26, **dadurch gekennzeichnet, daß** sie sich in Kombination mit einer Motoraufhängung (30) zum elastischen Halt des Motors (44) durch das Chassis oder die Karosserie des Fahrzeuges befindet.

## Revendications

1. Ensemble de butoir à limitation de mouvement destiné à limiter de façon élastique un mouvement relatif d'un premier et d'un deuxième corps (30, 124, 138, 152, 160, 166, 172, 182, 188, 206 ; 44, 126, 144, 156, 184, 200, 202) l'un vers l'autre, comprenant des moyens formant butoirs (60, 62, 86, 88, 105, 106, 120, 134, 148, 158, 164, 170, 178, 192, 208) réalisés en matériau élastique, et des moyens de montage (64, 66, 94, 96, 98, 112, 140, 154, 162, 168, 174, 176, 180, 194, 210) pour monter les moyens formant butoirs (60, 62, 86, 88, 105, 106, 120, 134, 148, 158, 164, 170, 178, 192, 208) entre les deux corps (30, 124, 138, 152, 160, 166, 172, 182, 188, 206 ; 44, 126, 144, 156, 184, 200, 202) grâce à quoi un mouvement relatif des deux corps (30, 124, 138, 152, 160, 166, 172, 182, 188, 206 ; 44, 126, 144, 156, 184, 200, 202) l'un vers l'autre subit une résistance par contact avec le matériau élastique et par compression de celui-ci, les moyens de montage (64, 66, 94, 96, 98, 112, 140, 154, 162, 168, 174, 176, 180, 194, 210) permettant aux moyens formant butoirs (60, 62, 86, 88, 105, 106, 120, 134, 148, 158, 164, 170, 178, 192, 208) de se déplacer au moins sur une étendue limitée en réponse à un mouvement relatif des deux corps (30, 124, 138, 152, 160, 166, 172, 182, 188, 206 ; 44, 126, 144, 156, 184, 200, 202) dans une direction transversale à leurs mouvements relatifs l'un vers l'autre, en réduisant grâce à cela la production d'une force de cisaillement dans le matériau élastique en réponse au mouvement transversal, **caractérisé en ce que** les moyens de montage (64, 66, 94, 96, 98, 112, 140, 154, 162, 168, 174, 176, 180, 194, 210) assurent un montage des moyens formant butoirs (60, 62, 86, 88, 105, 106, 120, 134, 148, 158, 164, 170, 178, 192, 208) pour un mouvement dans la direction transversale par flexion du matériau élastique.

2. Ensemble de butoir selon la revendication 1, **caractérisé en ce que** les moyens formant butoirs (60, 62, 86, 88, 105, 106, 120, 134, 148, 158, 164, 170, 178, 192, 208) comprennent une portion du matériau élastique formé sous une forme prédéterminée, et **en ce que** les moyens de montage comprennent des moyens d'attache flexibles (64, 66, 94, 96, 98, 112, 140, 154, 162, 168, 174, 176, 180, 194, 210).

3. Ensemble de butoir selon l'une ou l'autre des revendications 1 et 2, **caractérisé en ce que** les moyens de montage (64, 66, 94, 96, 98, 112, 140, 154, 162, 168, 174, 176, 180, 194, 210) assurent le montage des moyens formant butoirs sur l'un des corps (30, 124, 138, 152, 160, 166, 172, 182, 188, 206 ; 44, 126, 144, 156, 184, 200, 202).

4. Ensemble de butoir selon l'une quelconque des revendications précédentes, **caractérisé en ce que** les moyens formant butoirs (60, 62, 86, 88, 105, 106, 120, 134, 148, 158, 164, 170, 178, 192, 208) présentent au moins une surface incurvée vers l'un au moins des corps (44, 126, 144, 156, 184, 200, 202).

5. Ensemble de butoir selon la revendication 4, **caractérisé en ce que** les moyens formant butoirs (120, 134, 148, 158, 164, 170, 178, 192, 208) présentent également une surface incurvée vers l'autre corps (30, 124, 138, 152, 160, 166, 172, 182, 188, 206).

6. Ensemble de butoir selon l'une ou l'autre des revendications 3 et 4, **caractérisé en ce que** ledit mouvement transversal comprend un mouvement dudit corps (44, 126, 144, 156, 184, 200, 202) dans une direction généralement tangentielle à la surface incurvée est en contact avec celle-ci.

7. Ensemble de butoir selon l'une quelconque des revendications 4 à 6, **caractérisé en ce que** les moyens formant butoirs (134, 208) sont généralement sphériques.

8. Ensemble de butoir selon l'une quelconque des revendications 4 à 6, **caractérisé en ce que** les moyens formant butoirs (60, 62, 148, 164, 170, 178) sont généralement cylindriques.

9. Ensemble de butoir selon l'une quelconque des revendications 4 à 6, **caractérisé en ce que** les moyens formant butoirs (120) sont généralement ovales ou elliptiques.

10. Ensemble de butoir selon l'une quelconque des revendications précédentes, **caractérisé en ce que** les moyens formant butoirs (105, 106, 120) présentent une protubérance s'étendant vers l'un desdits corps (44, 126).

11. Ensemble de butoir selon l'une quelconque des revendications 1 à 6, **caractérisé en ce que** les moyens formant butoirs comprennent une pluralité de butoirs individuels (134, 148, 208) réalisés chacun en matériau élastique.

12. Ensemble de butoir selon la revendication 11, **caractérisé en ce que** les butoirs (134, 148) sont montés adjacents l'un à l'autre et présentent en section transversale des tailles respectives différentes de manière à être comprimés séquentiellement par un mouvement relatif des deux corps (30, 124, 138, 152, 160, 166, 172, 182, 188, 206 ; 44, 126, 144, 156, 184, 200, 202) l'un vers l'autre.

13. Ensemble de butoir selon l'une quelconque des revendications 1 à 3, **caractérisé en ce que** le premier corps (44, 202) est positionné dans une zone englobée par le deuxième corps (30, 206) de sorte que le mouvement relatif des deux corps (44, 202, 30, 206) l'un vers l'autre comprend un mouvement du premier corps (44, 202) vers une partie du deuxième corps (30, 206) et simultanément un mouvement du premier corps (44, 202) en éloignement d'une partie opposée du deuxième corps (30, 206), et **en ce que** les moyens formant butoirs comprennent des moyens formant butoirs (60, 62, 86, 88, 192, 208) positionnés à des emplacements écartés autour du premier corps (44, 202) et entre celui-ci et le deuxième corps (30, 206).

14. Ensemble de butoir selon la revendication 13, **caractérisé en ce que** le deuxième corps (206) s'étend de manière annulaire autour du premier corps (202).

15. Ensemble de butoirs selon l'une ou l'autre des revendications 13 et 14, **caractérisé en ce que** les moyens formant butoirs comprennent des butoirs individuels (60, 62, 86, 88, 208), réalisés chacun avec le matériau élastique.

16. Ensemble de butoir selon la revendication 15, **caractérisé en ce que** chacun des butoirs (60, 62, 86, 88, 208) présente une section transversale sphérique ou cylindrique.

17. Ensemble de butoir selon la revendication 16, **caractérisé en ce que** les butoirs (208) sont reliés les uns aux autres de manière flexible.

18. Ensemble de butoir selon la revendication 13, **caractérisé en ce que** les moyens formant butoirs (192) s'étendent en continu autour du premier corps.

19. Ensemble de butoir selon la revendication 18, **caractérisé en ce que** le deuxième corps (206) s'étend sous forme annulaire autour du premier corps (208), et **en ce que** les moyens formant butoirs (192) s'étendent sous forme annulaire autour du premier corps (208), et entre celui-ci et le deuxième corps (206).

20. Ensemble de butoir selon l'une quelconque des revendications précédentes, **caractérisé en ce que** les moyens formant butoirs (120) incorporent un renforcement rigide (132).

21. Ensemble de butoir selon l'une quelconque des revendications précédentes, **caractérisé en ce que** les moyens formant butoirs (164) incluent un espace creux (170) pour changer la compressibilité initiale des moyens formant butoirs (164).

22. Ensemble de butoir selon l'une quelconque des revendications précédentes, **caractérisé en ce que** les moyens formant butoirs (60, 62, 64, 148, 164, 192) incluent une extension flexible (70, 72, 150, 154, 168, 194), et dans lequel les moyens de montage comprennent des moyens pour recevoir et pour maintenir l'extension flexible (70, 72, 150, 154, 168, 194).

23. Ensemble de butoir selon l'une quelconque des revendications 1 à 21, **caractérisé en ce que** les moyens de montage comprennent une attache flexible sur les moyens formant butoirs.

24. Ensemble de butoir selon l'une quelconque des revendications 1 à 21, **caractérisé en ce que** les moyens de montage comprennent des moyens (94, 96) destinés à attacher les moyens formant butoirs (86, 88) de manière lâche et limitée.

25. Ensemble de butoir selon l'une quelconque des revendications 1 à 21, **caractérisé en ce que** les moyens de montage comprennent des moyens d'attache (180B, 180C) réalisés en matériau élastique et attachés aux moyens formant butoirs (180A) mais présentant une dimension plus importante que les moyens formant butoirs (180A) dans la direction de mouvement relatif l'un vers l'autre des deux corps (182, 184) de manière à être normalement comprimés entre les deux corps (182, 184), et supporter ainsi les moyens formant butoirs (180A) entre eux.

26. Ensemble de butoir selon l'une quelconque des revendications précédentes, **caractérisé en ce que** l'un des corps (30) fait partie du châssis ou de la carrosserie d'un véhicule, ou est connecté à un tel châssis ou carrosserie, et **en ce que** l'autre corps (44) fait partie du moteur du véhicule ou est connecté à ce moteur.

27. Ensemble de butoir selon la revendication 26, **caractérisé en ce qu'**il se trouve en combinaison avec une monture de moteur (30) afin de supporter élastiquement le moteur (44) depuis le châssis ou la carrosserie du véhicule.
